# EUROPÄISCHE PATENTSCHRIFT

(11) **EP 1 116 544 B1**
(45) Veröffentlichungstag und Bekanntmachung des Hinweises auf die Patenterteilung: **02.07.2003**
(21) Anmeldenummer: 00125103.2
(22) Anmeldetag: 17.11.2000
(51) Int. Cl.: B23K 9/32

(54) **Vorrichtung zur Gasbeflutung**
Device for gas flooding
Appareil pour le remplissage de gaz

(30) Priorität: 13.01.2000 DE 10000999
(43) Veröffentlichungstag der Anmeldung: 18.07.2001
(73) Patentinhaber: Jankus, Werner, D-58313 Herdecke (DE)
(72) Erfinder: Jankus, Werner, D-58313 Herdecke (DE)
(74) Vertreter: Niemann, Uwe, Dr.-Ing.

(56) Entgegenhaltungen:
- EP-A- 0 486 420
- DE-A- 4 017 886
- DE-U- 8 204 954
- DE-U- 8 628 587
- US-A- 5 187 343
- PATENT ABSTRACTS OF JAPAN vol. 013, no. 555 (M-904), 11. Dezember 1989 (1989-12-11) & JP 01 228675 A (JAPAN STEEL & TUBE CONSTR CO LTD), 12. September 1989 (1989-09-12)
- PATENT ABSTRACTS OF JAPAN vol. 1997, no. 07, 31. Juli 1997 (1997-07-31) & JP 09 076062 A (HITACHI PLANT ENG &CONSTR CO LTD), 25. März 1997 (1997-03-25)

## Beschreibung

Die Erfindung betrifft eine Vorrichtung zur Gasbeflutung von zwei miteinander zu verschweißenden Rohren oder Behälterteilen mit einem in den zu beflutenden Rohr- oder Behälterabschnitt einführbaren Körper, der mit einem Gasanschluß verbunden ist und eine Gasaustrittsfläche aufweist, und mit beidseits des Körpers angeordneten, zumindest teilweise nachgiebigen Stützen, die gegen die Rohr- oder Behälterinnenseiten abdichten, wobei der Gasanschluß im Bereich der Außenseite einer der Stützen angeordnet ist und ein mit dem zu beflutenden Rohr- oder Behälterabschnitt verbundener Gasauslaß vorgesehen ist

Eine derartige Vorrichtung ist bekannt (DE 37 28 184 C2). Die Stützen können aus einer, in der Praxis auch aus mehreren hintereinander angeordneten Dichtscheiben aus einem temperaturbeständigen Silikonkautschuk bestehen, wobei jede Dichtscheibe eine oder auch zwei gegen die Rohr- oder Behälterinnenseiten abdichtenden Dichtlippen aufweisen kann. Der Gasanschluß befindet sich auf einer Seite der Vorrichtung, der Gasauslaß auf der anderen Seite. Zur Vorbereitung des Schweißvorganges wird zunächst der zwischen den beiden Stützen befindliche Raum mit Schutzgas gespült, um dort vorhandenen Sauerstoff auszutreiben. Überschüssiges Gas tritt aus diesem Raum durch die zwischen den Stützen befindliche Schweißfuge und durch den Gasauslaß aus. Die Spülung bzw. Beflutung dieses Raums mit Schutzgas wird während des Schweißvorganges fortgesetzt, um zu verhindem, daß Sauerstoff eindringt

Dokument US-A-5187343 wird als nächstliegenden Stand der Technik angesehen und offenbart eine Vorrichtung zur Gasbeflutung wie im Oberbegriff des Anspruchs 1 definiert.

Da beim Schweißen von hochwertigen Stählen bereits Sauerstoffgehalte von wenigen ppm (parts per million) sich schädlich auf die Schweißnaht und die daran anschließenden Übergangszonen auswirken können, wird der Sauerstoffgehalt in dem zu beflutenden Raum zwischen den beiden Stützen in der Praxis mit an ein Sauerstoffmeßgerät angeschlossenen Sonden erfaßt, die durch die Schweißfuge in den Raum eingeführt werden. Das ist nicht nur umständlich, sondern auch nicht sehr zuverlässig, weil durch die Sonde selbst die Strömungsverhältnisse im Raum gestört werden. Hinzu kommt, daß die Sonde zumindest in der Endphase des Schweißvorganges entfernt werden muß. Störungen können sich auch dann ergeben, wenn der Rohr- oder Behälterabschnitt, der sich an die mit dem Gasauslaß versehene Seite der Vorrichtung anschließt, geschlossen ist, weil sich in diesem Raum dann ein Druck aufbauen kann, der eine kontinuierliche Spülung oder Beflutung des Raums zwischen den beiden Stützen verhindert.

Aufgabe der Erfindung ist es, die Qualitätskontrolle und die Qualitätssicherung während des Schweißens zu verbessern.

Diese Aufgabe wird dadurch gelöst, daß der Gasanschluß und der Gasauslaß im Bereich der Außenseite derselben Stütze angeordnet sind und daß der Gasauslaß eine mit einem Sauerstoffmeßgerät verbindbare Zweigleitung aufweist. Damit ist eine laufende Überwachung und Kontrolle des Sauerstoffgehaltes im zu beflutenden Raum vor, während und nach dem Schweißvorgang gewährleistet. Über die Zweigleitung wird dem Sauerstoffmeßgerät nur die seiner Kapazität entsprechende Gasmenge zugeführt. Die restliche Gasmenge fließt über den Gasauslaß auf derjenigen Seite der Vorrichtung ab, die ohnehin zum offenen Rohr- oder Behälterende gerichtet ist. Der Gasauslaß ist über einen Kanal mit dem zu beflutenden Rohr- oder Behälterabschnitt verbunden, und die Zweigleitung ist eine sich in den Kanal erstreckende Sonde. Der Kanal ist ein im Nabenbereich der Stütze angeordneter Ringkanal, der eine vom Gasanschluß ausgehende Gasleitung umgibt.

Um eine gründliche Durchspülung bzw. Beflutung des Raums zwischen den beiden Stützen zu gewährleisten, wird regelmäßig der mit der Gasaustrittsfläche versehene Körper mit Abstand von demjenigen Ort angeordnet, von dem das Gas wieder zum Gasauslaß strömt. Dementsprechend wird der mit der Gasaustrittsfläche versehene Körper in der Nähe derjenigen Stütze angeordnet, die der mit dem Gasanschluß versehenen Stütze gegenüber liegt. Damit die Vorrichtung auch durch gekrümmte Rohre bewegt, insbesondere gezogen werden kann, werden die beiden Stützen durch ein Universalgelenk miteinander verbunden, durch welches auch eine vom Gasanschluß führende Gasleitung zum Körper mit der Gasaustrittsfläche geführt ist. In der Praxis wurden dazu Wellschläuche oder Gliederschläuche eingesetzt, die jedoch nicht hinreichend dicht waren und verhältnismäßig lang sein mußten, um die geforderte Beweglichkeit der beiden Stützen zu gewährleisten.

Bei einer bevorzugten Ausführung weist das Universalgelenk einen Leitungsabschnitt, der an zumindest einem Ende einen Kugelkopf trägt, sowie ein den Kugelkopf formschlüssig und abdichtend überfassendes Anschlußstück auf. Derartige Universalgelenke mit einem Anschlußstück sind bekannt (DE 36 27 336 C2). Der Leitungsabschnitt kann aber auch an jedem Ende einen Kugelkopf aufweisen, wobei die zugeordneten Anschlußstücke mit den Stützen verbindbar sind. Auch derartige Ausführungen sind an sich bekannt (DE 82 04 954 U1). Diese Universalgelenke zeichnen sich durch kurze Baulänge aus und ermöglichen es, die beiden Stützen gegeneinander um für die Praxis ausreichende Winkel gegeneinander zu verschwenken, die erforderlich sind, wenn die Vorrichtung durch Rohrkrümmer bewegt wird und dabei die dichtende Anlage der Stützen gegen die Rohr- oder Behälterinnenseite aufrecht erhalten werden soll.

Im folgenden werden in der Zeichnung dargestellte Ausführungsbeispiele der Erfindung erläutert; es zeigen:
- Figur 1: schematisch und teilweise einen Axialschnitt durch eine Vorrichtung zur Gasbeflutung von zwei miteinander zu verschweißenden Rohrabschnitten,
- Figur 2: den Gegenstand nach Figur 1 teilweise in einem gekrümmten Rohrabschnitt,
- Figur 3: eine andere Ausführung des Gegenstandes nach Figur 1,
- Figur 4: eine andere Ausführung des Gegenstandes nach Figur 1.

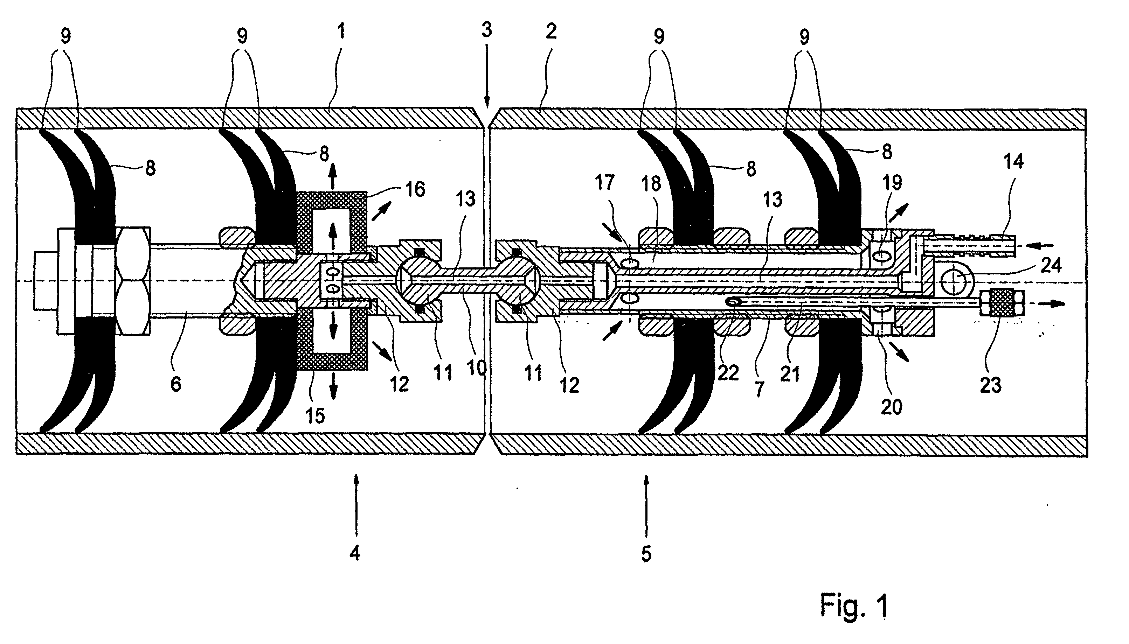

In Figur 1 sind zwei Enden 1, 2 von miteinander zu verschweißenden Rohrabschnitten dargestellt, zwischen denen sich eine Schweißfuge 3 befindet. In das Innere der beiden Enden 1, 2 ist eine Vorrichtung zur Gasbeflutung eingesetzt, die in ihrem grundsätzlichen Aufbau besteht aus zwei beidseits der Schweißnaht 3 angeordneten Stützen 4, 5. Jede Stütze 4 bzw. 5 besteht aus einem Nabenkörper 6 bzw. 7 und darauf befestigten Dichtscheiben 8 aus einem hitzebeständigen Silikonkautschuk. Die Dichtscheiben 8 tragen bei der dargestellten Ausführung umlaufende Dichtlippen 9, die mit den Innenseiten der Enden 1, 2 abdichten. Bei der dargestellten Ausführung sind auf jeden Nabenkörper 6 bzw. 7 jeweils zwei Dichtscheiben 8 befestigt. Man kann aber auch drei Dichtscheiben 8 auf jeden Nabenkörper 6 bzw. 7 befestigen. Auch die Anzahl der Dichtlippen 9 jeder Dichtscheibe 8 kann variiert werden.

Die beiden Stützen 4 und 5 sind über ein Universalgelenk miteinander verbunden, zu dem ein starrer Leitungsabschnitt 10 gehört, der an beiden Enden einen Kugelkopf 11 trägt. Die Kugelköpfe 11 sind formschlüssig und abdichtend von Anschlußstücken 12 überfaßt, die jeweils mit dem zugeordneten Nabenkörper 6 bzw. 7 verbunden sind. Durch den Leitungsabschnitt 10, die Kugelköpfe 11 und die Anschlußstücke 12 erstreckt sich eine Gasleitung 13, die sich mittig durch den Nabenkörper 7 bis zu einem am rechten Ende des Nabenkörpers 7 vorgesehenen Gasanschluß 14 fortsetzt.

Vom Gasanschluß 14 strömt das Schutzgas durch die Gasleitung 13 in das Innere eines Körpers 15 aus feinporigem Material, z.B. Sintermetall, der bei der dargestellten Ausführung als hohler Ringkörper ausgebildet ist und dessen Oberfläche dementsprechend allseitig als Gasaustrittsfläche 16 dient. Der Körper 15 ist bei der Ausführung nach Figur 1 unmittelbar neben der Stütze 4 an deren Nabenkörper 6 befestigt.

Das aus der Gasaustrittsfläche 16 ausströmende Schutzgas spült bzw. beflutet den Raum zwischen den beiden Stützen 4, 5 und gelangt über Öffnungen 17 in einen die Gasleitung 13 umgebenden Ringkanal 18 des Nabenkörpers 7. Aus diesem Ringkanal 18 gelangt das ausströmende Gas über Öffnungen 19 zu einem Gasaustritt 20.

In den Ringkanal 18 erstreckt sich eine Sonde 21, deren im Ringkanal 18 befindliches Ende 22 abgeschrägt ist und deren anderes Ende außerhalb des Nabenkörpers 7 einen Anschluß 23 für ein nicht dargestelltes Sauerstoffmeßgerät trägt. Über die Sonde 21 wird dem Sauerstoffmeßgerät ständig eine der Kapazität des Sauerstoffmeßgerätes entsprechende Teilmenge des aus dem gespülten bzw. befluteten Raum zwischen den beiden Stützen 4, 5 ausströmenden Gases zugeführt, so daß eine ständige Messung des Sauerstoffgehaltes in diesem Raum möglich ist.

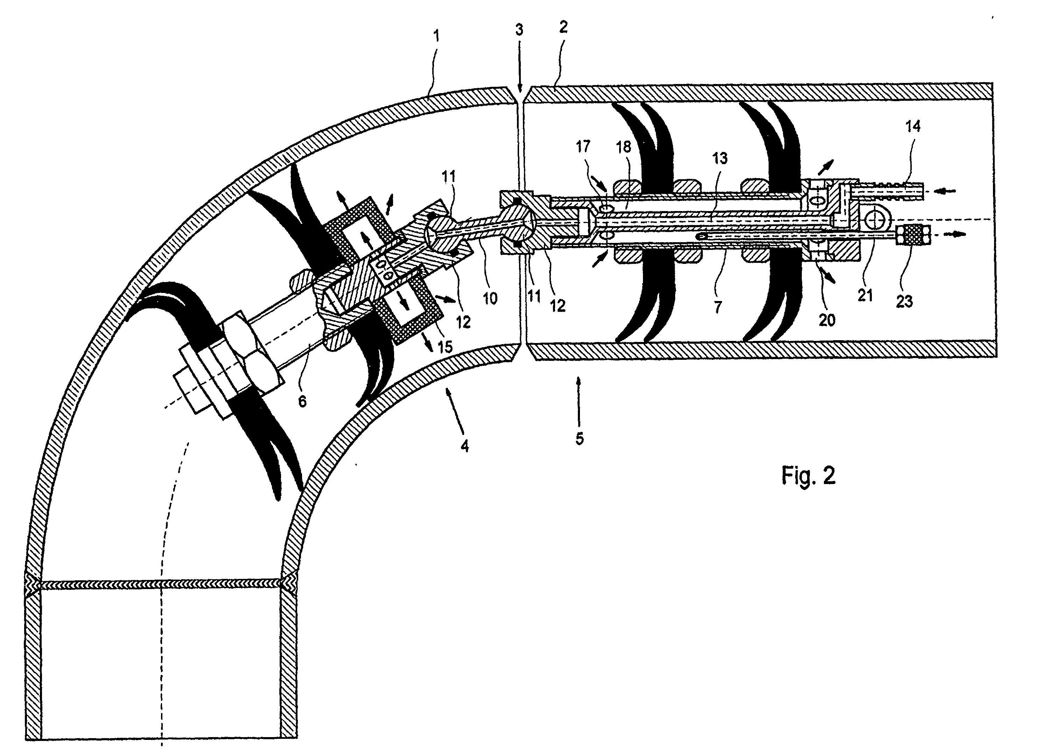

Wenn der Schweißvorgang beendet und die Schweißfuge 3 durch eine Schweißnaht geschlossen ist, kann die Vorrichtung mit einem an eine Öse 24 des Nabenkörpers 7 angeschlossenes Zugmittel welter bewegt werden. Dabei kann die Vorrichtung auch gekrümmte Rohrabschnitte 1 passieren, wie in Figur 2 dargestellt, ohne daß die Dichtung zwischen den Stützen 4, 5 und den Rohrinnenseiten aufgehoben wird.

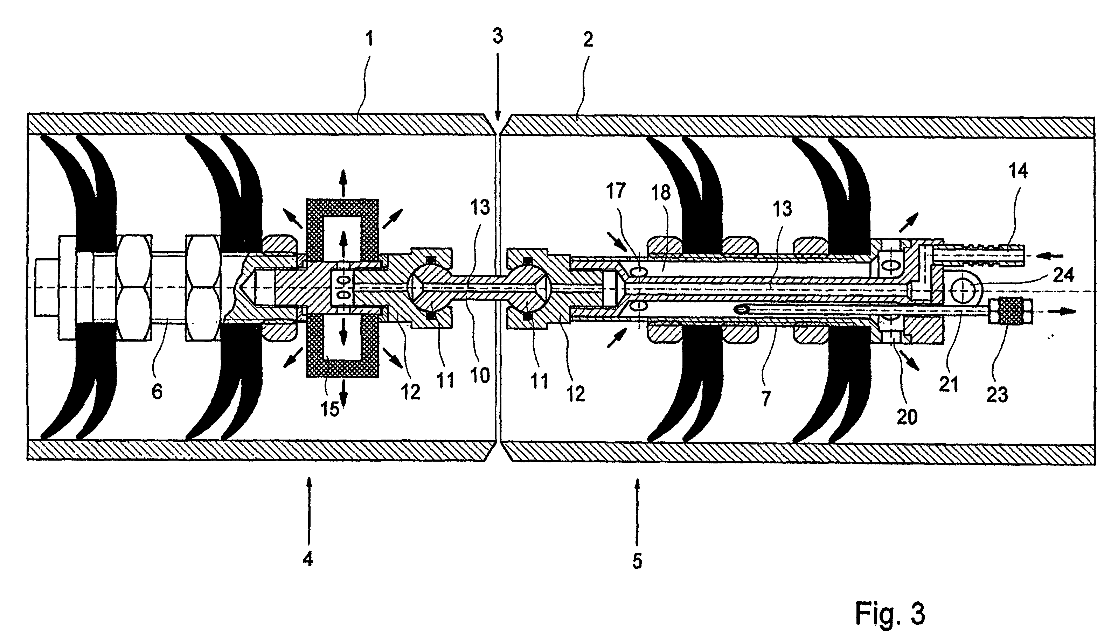

Bei der in Figur 3 wiedergegebenen Ausführung bezeichnen gleiche Bezugszeichen gleiche Teile. Die Konstruktion dieser Ausführung ist im wesentlichen identisch mit der in Figur 1 dargestellten Ausführung, mit der Maßgabe, daß der Körper 15 aus feinporigem Material mit Abstand zur Stütze 4 angeordnet ist.

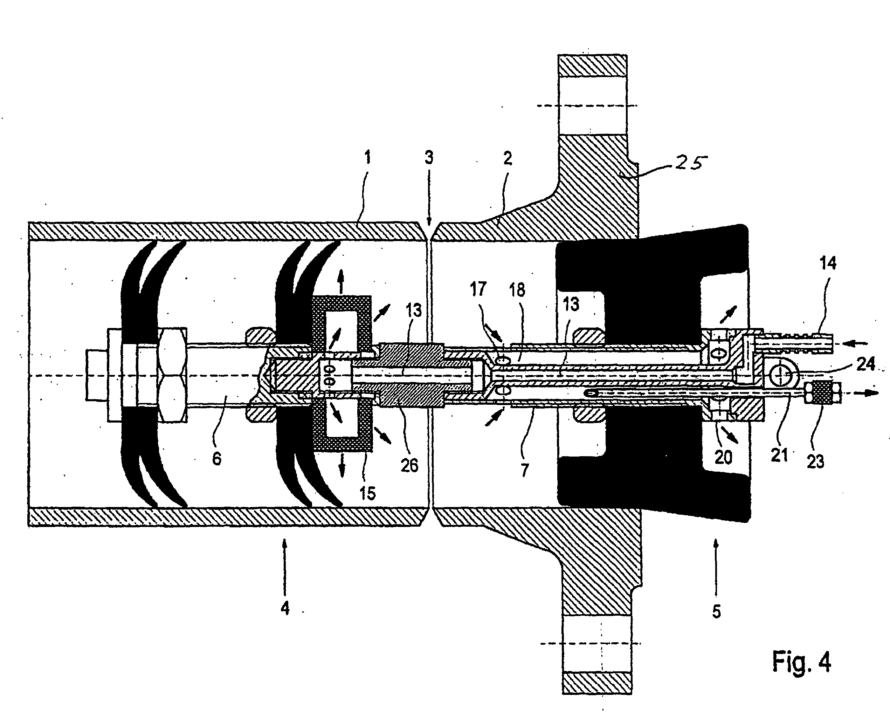

Die in Figur 4 wiedergegebene Ausführung wird eingesetzt, wenn das Ende 1 eines Rohrabschnittes mit dem Ende 2 eines Flansches 25 verschweißt werden soll. Dazu ist die auf dem Nabenkörper 7 befestigte Stütze 5 als Stopfen mit teilweise konischer Kontur ausgebildet, der dichtend in die Flanschöffnung eingesetzt werden kann. Das Universalgelenk ist ersetzt durch ein starres Anschlußstück 26.

## Patentansprüche

1. Vorrichtung zur Gasbeflutung von zwei miteinander zu verschweißenden Rohren (1, 2) oder Behälterteilen mit einem in den zu beflutenden Rohr- oder Behälterabschnitt einführbaren Körper (15), der mit einem Gasanschluß (14) verbunden ist und eine Gasaustrittsfläche (16) aufweist, und mit beidseits des Körpers (15) angeordneten, zumindest teilweise nachgiebigen Stützen (4, 5), die gegen die Rohroder Behälterinnenseiten abdichten, wobei der Gasanschluß (14) im Bereich der Außenseite einer der Stützen (4, 5) angeordnet ist und ein mit dem zu beflutenden Rohr- oder Behälterabschnitt verbundener Gasauslaß (20) vorgesehen ist, wobei der Gasanschluß (14) und der Gasauslaß (20) im Bereich der Außenseite derselben Stütze (5) angeordnet sind und der Gasauslaß (20) eine mit einem Sauerstoffmeßgerät verbindbare zweigleitung aufweist, **dadurch gekennzeichnet, daß** die zweigleitung eine sich in einen Ringkanal (18) erstreckende Sonde (21) ist, wobei der Ringkanal (18) Nabenbereich der Stütze (5) angeordnet ist und eine vom Gasanschluß (14) ausgehende Gasleitung (13) umgibt.

2. Vorrichtung nach Anspruch 1, **dadurch gekennzeichnet , daß** die Gasleitung (13) durch ein die beiden Stützen (4, 5) verbindendes Universalgelenk (10, 11, 12) bis zum Körper (15) mit der Gasaustrittsfläche (16) geführt ist.

3. Vorrichtung nach Anspruch 2, **dadurch gekennzeichnet, daß** das Universalgelenk einen Leitungsabschnitt (10), der an zumindest einem Ende einen Kugelkopf (11) trägt, sowie ein dem Kugelkopf (11) formschlüssig und abdichtend überfassendes Anschlußstück (12) aufweist.

4. Vorrichtung nach Anspruch 3, **dadurch gekennzeichnet, daß** der Leitungsabschnitt (10) an jedem Ende einen Kugelkopf (11) trägt und daß die zugeordneten Anschlußstücke (12) mit den Stützen (4, 5) verbindbar sind.

## Claims

1. Device for gas flooding two pipes (1, 2) or container parts, which are to be welded together, with a body (15) which is introducible into the pipe or container section to be flooded and which is connected with a gas connection (14) and has a gas outlet area (16), and with at least partly yielding stub pipes (4, 5), which are arranged on both sides of the body (15) and which seal off relative to the pipe or container inner sides, wherein the gas connection (14) is arranged in the region of the outer end of one of the stub pipes (4, 5) and a gas outlet (20) connected with the pipe or container section to be flooded is provided, wherein the gas connection (14) and the gas outlet (20) are arranged in the region of the outer end of the same stub pipe (5) and the gas outlet (20) has a branch duct connectible with an oxygen measuring instrument, **characterised in that** the branch duct is a probe (21) extending in an annular channel (18), wherein the annular channel (18) is arranged in the hub region of the stub pipe (5) and surrounds a gas duct (13) going out from the gas connection (14).

2. Device according to claim 1, **characterised in that** the gas duct (13) is led through a universal joint (10, 11, 12), which connects the two stub pipes (4, 5), up to the body (15) with the gas outlet area (16).

3. Device according to claim 2, **characterised in that** the universal joint comprises a duct section (10), which carries a ball head (11) at at least one end, as well as a connecting member (12) engaging over the ball head (11) in shape-locking and sealing manner.

4. Device according to claim 3, **characterised in that** the duct section (10) has a ball head (11) at each end and that the associated connecting members (12) are connectible with the stub pipes (4, 5).

## Revendications

1. Dispositif pour remplir de gaz deux tuyaux (1, 2) ou parties de récipient à assembler entre eux par soudage, avec un corps (15), qui peut être introduit dans le tronçon de tuyau ou de récipient à remplir et qui est relié à un branchement de gaz (14) et présente une surface de sortie de gaz (16), et avec des supports (4, 5) au moins partiellement flexibles, disposés de part et d'autre du corps (15), qui assurent l'étanchéité vis-à-vis des côtés intérieurs des tuyaux ou du récipient, le branchement de gaz (14) étant disposé dans la région du côté extérieur d'un des supports (4, 5) et une évacuation de gaz (20), reliée au tronçon de tuyau ou de récipient à remplir, étant prévue, le branchement de gaz (14) et l'évacuation de gaz (20) étant disposés dans la région du côté extérieur du même support (5), et l'évacuation de gaz (20) présentant une conduite dérivée pouvant être reliée à un appareil de mesure d'oxygène, **caractérisé en ce que** la conduite dérivée est une sonde (21) s'étendant dans un canal annulaire (18), le canal annulaire (18) étant disposé dans la région du moyeu du support (5) et entourant une conduite de gaz (13) partant du branchement de gaz (14).

2. Dispositif selon la revendication 1, **caractérisé en ce que** la conduite de gaz (13) est dirigée jusqu'au corps (15) muni de la surface de sortie de gaz (16) à travers un joint universel (10, 11, 12) reliant les deux supports (4, 5).

3. Dispositif selon la revendication 2, **caractérisé en ce que** le joint universel présente un tronçon de conduite (10) portant une tête sphérique (11) à au moins une de ses extrémités, et un raccord (12) recouvrant en engagement positif et en étanchéité la tête sphérique (11).

4. Dispositif selon la revendication 3, **caractérisé en ce que** le tronçon de conduite (10) porte une tête sphérique (11) à chaque extrémité, et **en ce que** les raccords associés (12) peuvent être reliés aux supports (4, 5).
